# EUROPEAN PATENT APPLICATION

(11) **EP 4 300 307 A1**
(43) Date of publication of application: **03.01.2024**
(21) Application number: 22214202.8
(22) Date of filing: 16.12.2022
(51) Int. Cl.: G06F 9/50, G06F 9/48, G06F 9/455, G06F 9/54

(54) **SYSTEMS AND METHOD FOR PROCESSING PRIVILEGED INSTRUCTIONS USING USER SPACE MEMORY**

(30) Priority: 28.06.2022 US 202217851777
(71) Applicant: Red Hat, Inc., Raleigh, NC 27601 (US)
(72) Inventor: TSIRKIN, Michael, Raleigh (US)
(74) Representative: Murgitroyd & Company

(57) **Abstract**

Systems and methods for enabling a hypervisor that is implemented in the user space to execute privileged instructions on behalf of the virtual machines without triggering VM exits. An example method may comprise detecting, by an exception handler of a virtual machine running on a host computer system, a request to execute a privileged instruction by the virtual machine; storing at least a part of a state of the virtual machine in a memory associated with the virtual machine; signaling, by modifying a predefined memory location in the memory associated with the VM, a request to execute a privileged instruction by a user space processing thread running on the host computer system; and pausing execution of the virtual machine.

## Description

### TECHNICAL FIELD

The present disclosure is generally related to virtualized computer systems, and more particularly, to processing privileged instructions using user space memory.

### BACKGROUND

Modern computer systems include memory management features that provide memory protection. The memory management features may restrict particular processes from accessing particular portions of memory. The restriction may be enforced using a combination of hardware features and kernel features that work together to enable or restrict an executing process from accessing memory resources. The memory resources are often separated into user space and kernel space and when a user space process attempts to access memory resources in kernel space the memory management features may generate a segmentation fault. The segmentation fault may indicate that an access violation occurred so that it can be handled accordingly.

### SUMMARY OF THE DISCLOSURE

A method comprising: detecting, by an exception handler of a virtual machine running on a host computer system, a request to execute a privileged instruction by the virtual machine;
storing at least a part of a state of the virtual machine in a memory associated with the virtual machine;
signaling, by modifying a predefined memory location in the memory associated with the VM, a request to execute a privileged instruction by a user space processing thread running on the host computer system;
and pausing execution of the virtual machine.

The method may further comprise: responsive to receiving, from the user space processing thread, a notification that the privileged instruction was performed, resuming, by the exception handler, execution of the virtual machine. The notification may comprise an interrupt. The method may further comprise: responsive to determining that the predefined memory location was modified, resuming, by the exception handler, execution of the virtual machine. The predetermined memory location may comprise a bit flag. The user space processing thread may implement a user space hypervisor. Causing execution of the virtual machine may comprise performing at least one of a MWAIT instruction, a polling instruction, or a halt instruction.

According to a second aspect of the present disclosure there is provided a method, comprising:
monitoring, by user space processing thread running on a host computer system, a predefined memory location of a memory associated with a virtual machine running on the host computer system;
responsive to detecting a modification of the predefined memory location, executing a privileged instruction on behalf of the virtual machine; and
   sending a notification to the virtual machine that the privileged instruction was executed.

The method may further comprise: executing the virtual machine using another processing thread associated with a same central processing unit (CPU) as the user space processing thread. The notification may comprise modifying the predefined memory location to indicate, to the virtual machine, that the privileged instruction has been executed. The predetermined memory location may comprise a bit flag. The method may further comprise: extracting the privileged instruction from state data stored in the memory associated with the virtual machine. Monitoring the predefined memory location may comprise executing at least one of a UMONITOR instruction or a UMWAIT instruction. The user space processing thread may implement a user space hypervisor.

According to a third aspect of the present disclosure there is provided a system, comprising:
a memory;
a processing device operatively coupled to the memory, the processing device configured to:
   monitor, by user space processing thread running on a host computer system, a predefined memory location of a memory associated with a virtual machine running on the host computer system;
   responsive to detecting a modification of the predefined memory location, execute a privileged instruction on behalf of the virtual machine; and
   send a notification to the virtual machine that the privileged instruction was executed.

The processing device may be configured to: execute the virtual machine using another processing thread associated with a same central processing unit (CPU) as the user space processing thread. The notification may comprise modifying the predefined memory location to indicate, to the virtual machine, that the privileged instruction has been executed. The predetermined memory location may comprise a bit flag. The processing device may be configured to: extract the privileged instruction from state data stored in the memory associated with the virtual machine. Monitoring the predefined memory location may comprise executing at least one of a UMONITOR instruction or a UMWAIT instruction.

### BRIEF DESCRIPTION OF THE DRAWINGS

The present disclosure is illustrated by way of examples, and not by way of limitation, and may be more fully understood with references to the following detailed description when considered in connection with the figures, in which:
**FIG. 1** depicts a high-level block diagram of an example computing system that provides memory isolation for a computing process, in accordance with one or more aspects of the present disclosure;
**FIG. 2** depicts a block diagram illustrating components and modules of an example computer system, in accordance with one or more aspects of the present disclosure;
**FIG. 3** depicts a flow diagram of an example method for signaling a request to execute a privileged instruction, in accordance with one or more aspects of the present disclosure;
**FIG. 4** depicts a block diagram of an example computer system in accordance with one or more aspects of the present disclosure;
**FIG. 5** depicts a flow diagram of another example method for signaling a request to execute a privileged instruction, in accordance with one or more aspects of the present disclosure;
**FIG. 6** depicts a flow diagram of an example method for executing a privileged instruction on behalf of a virtual machine, in accordance with one or more aspects of the present disclosure;
**FIG. 7** depicts a block diagram of an example computer system in accordance with one or more aspects of the present disclosure;
**FIG. 8** depicts a flow diagram of another example method for executing a privileged instruction on behalf of a virtual machine, in accordance with one or more aspects of the present disclosure; and
**FIG. 9** depicts a block diagram of an illustrative computing device operating in accordance with the examples of the present disclosure.

### DETAILED DESCRIPTION

Described herein are systems and methods for processing privileged instructions using user space memory.

Modern computer systems may include memory virtualization features that contain security enhancements to reduce the computer systems' vulnerability to attack. An example of a security enhancement involves segregating virtual memory into kernel space and user space. The kernel space may be reserved for running a privileged operating system kernel, kernel extensions, and most device drivers. The user space may be a memory area where application software (e.g., application programs) and some drivers execute. Memory virtualization details are often implemented by features of a kernel and may be hidden from a processing thread executing in user space. Application programs running on the computer system may communicate with the kernel using system calls. A system call is a programmatic way in which an application program may request a kernel to perform a privileged instruction (e.g., an instruction that can be executed only by the operating system). For example, in response to a request by the application program through a system call, the kernel may provide privileged services such as memory management, process management, file management, and input/output (I/O) management.

In an example computer system, in response to the kernel receiving a request to perform a privileged instruction, the kernel may first perform one or more time-consuming functions, such as temporarily suspending execution of the application program or the virtual machine to the kernel (e.g., by a VMExit event), verify whether the application program attempting to access a memory location (via the restricted service) has permission to access the memory location, performing the privileged instruction, subsequently restarting the application program or the virtual machine (e.g., by a VMEnter instruction), etc. These processes that are handled by the kernel are typically performed in kernel space and hidden from user space processing threads. Thus, in addition to being time consuming and resource consuming, these process may also expose the kernel to malicious software.

Aspects of the present disclosure address the above and other deficiencies by providing technology that enables a hypervisor that is implemented in the user space to execute privileged instructions on behalf of the virtual machines without triggering VM exits. In particular, the user space processing thread implementing the hypervisor may monitor a specific memory location (e.g., a bit flag, a word, a page, etc.) in the address space of a virtual machine (VM). The memory location may be utilized by the VM to request the hypervisor to perform a privileged operation on behalf of the VM without triggering a VM exit. In some embodiments, the user space processing thread may use UMONITOR instruction to monitor the specified memory location. A parameter of the UMONITOR instruction may specify an address range to be monitored by hardware and activate the monitoring.

While the user space processing thread implementing the hypervisor monitors the specific memory location, another user space processing thread may implement a UMWAIT instruction on the specific memory location. The processing thread executing the UMWAIT instruction may wake up and execute a set of instructions in response to a change to the address range specified in the UMONITOR instruction. The set of instruction may be used to execute the privileged instruction on behalf of the VM.

When a VM requests execution a privileged instruction, an exception handler of the VM may detect the request and store the execution state of the VM in the user space memory. The execution state of the VM may include the memory state of the VM, the virtual central processing unit (vCPU) state of the VM, the connectivity state of the VM, etc. The exception handler may then modify the monitored memory location to signal the hypervisor that the VM requests execution of the privileged instruction. Further, the exception handler may pause the execution of the virtual machine using, for example, a MWAIT instruction, a polling instruction, a halt instruction, etc.

The UMWAIT processing thread may detect the modification to the monitored memory location and extract the privileged instruction from the stored execution state. The UMWAIT processing thread may then execute the privileged instruction on behalf of the VM. Once executed, the UMWAIT processing thread may send a notification to the exception handler that the privileged instruction was executed. For example, the UMWAIT processing thread may modify the monitored memory location to its original state. Upon detecting the modification to the monitored memory location, the exception handler may resume execution of the VM.

In some embodiments, both user space processing threads may be executed by the same central processing unit (CPU). Since the UMWAIT processing thread is idle while waiting, it does not impede user space processing thread implementing the hypervisor or other processing threads used by the VM. In other embodiments, different CPUs may execute each user space processing thread. Accordingly, aspects of the present disclosure reduce time and resource consumption when processing privileged instructions executed on behalf of the virtual machine.

Various aspects of the above referenced methods and systems are described in details herein below by way of examples, rather than by way of limitation. The examples provided below discuss a computer system where the computing processes may be managed by aspects of a kernel, a hypervisor, a host operating system, a virtual machine, or a combination thereof. In other examples, the computing processes may be performed in a computer system that is absent a hypervisor or other hardware virtualization features (e.g., virtual machines) discussed below.

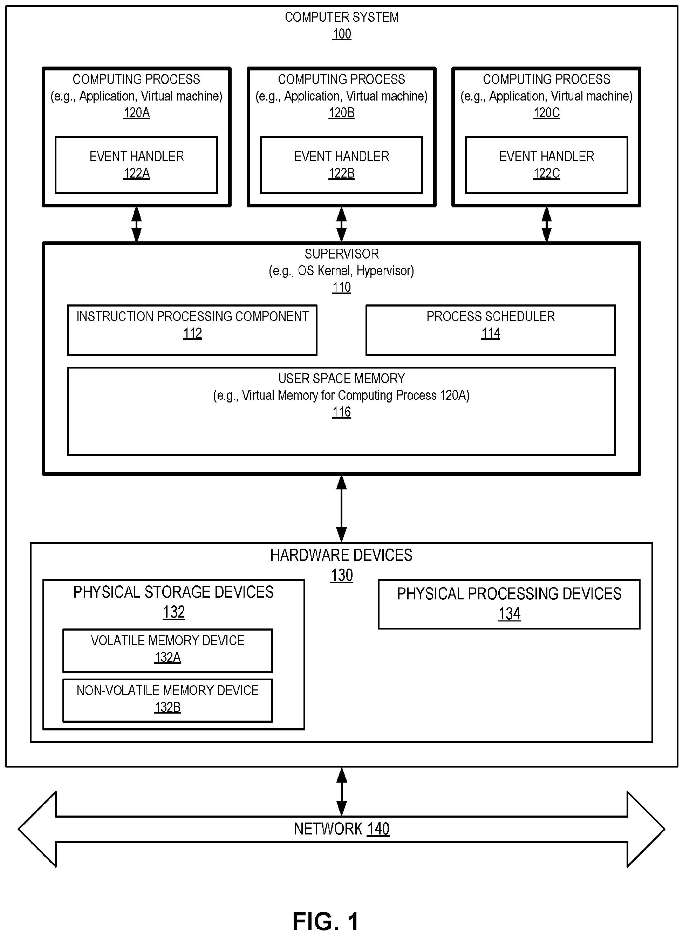

**FIG. 1** depicts an illustrative architecture of elements of a computing system 100, in accordance with an embodiment of the present disclosure. Computing system 100 may be a single host machine or multiple host machines arranged in a heterogeneous or homogenous group (e.g., cluster) and may include one or more rack mounted servers, workstations, desktop computers, notebook computers, tablet computers, mobile phones, palm-sized computing devices, personal digital assistants (PDAs), etc. It should be noted that other architectures for computing system 100 are possible, and that the implementation of a computing system utilizing embodiments of the disclosure are not necessarily limited to the specific architecture depicted. In one example, computing system 100 may be a computing device implemented with x86 hardware. In another example, computing system 100 may be a computing device implemented with PowerPC^{®}, SPARC^{®}, or other hardware. In the example shown in **FIG. 1****,** computing system 100 may include a supervisor 110, computing processes 120A-C, computing resources 130, and a network 140.

Supervisor 110 may manage the execution of one or more computing processes and provide the computing processes with access to one or more underlying computing devices (e.g., hardware or virtualized resources). Supervisor 110 may be the same or similar to a kernel and may be a part of an operating system, hypervisor, or a combination thereof. Supervisor 110 may interact with hardware devices 130 and provide hardware virtualization, operating-system virtualization, other virtualization, or a combination thereof. Hardware virtualization may involve the creation of one or more virtual machines that emulate an instance of a physical computing machine. Operating-system-level virtualization may involve the creation of one or more containers that emulate an instance of an operating system. In one example, supervisor 110 may be part of a non-virtualized operating system that is absent hardware virtualization and operating-system-level virtualization and each of the computing processes 120A-C may be an application process managed by the non-virtualized operating system. In another example, supervisor 110 may be a hypervisor or include hypervisor functionality and each of computing processes 120A-C may be or execute within a separate virtual machine or container. In either example, the supervisor may be implemented as part of a kernel and execute as one or more processes in kernel space (e.g., privileged mode, kernel mode, root mode).

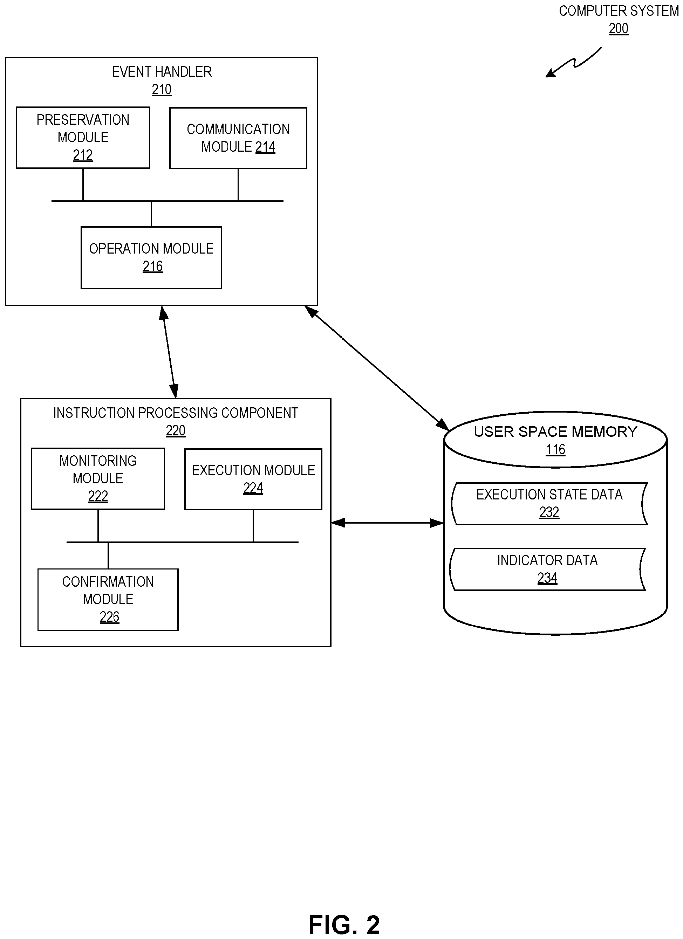

In the example, shown in **FIG. 1****,** supervisor 110 may include instruction processing component 112, process scheduler 114, and user space memory 116. Instruction processing component 112 may enable supervisor 110 to process privileged instructions programmed to the user space memory 116 by monitoring a selected address range and executing a paused processing thread in response to detecting modification to the selected address range (e.g., an executed write operation). Instruction processing component 112 is discussed in more detail in regards to **FIG. 2** and may be used individually or in combination to provide enhanced memory management features for computing processes 120A-C.

Computing processes 120A-C may include a sequence of instructions that can be executed by one or more processing devices (e.g., physical processing devices 134). A computing process may be managed by supervisor 110 or may be a part of supervisor 110. For example, supervisor 110 may execute as one or more computing processes that cooperate to manage resource accessed by computing processes 120A-C. Each computing process may include one or more processing threads, processes, other stream of executable instructions, or a combination thereof. A processing thread ("thread") may any computer based "thread of execution" and may be the smallest sequence of programmed instructions managed by supervisor 110. A process may include one or more threads and may be an instance of an executable computer program.

Computing processes 120A-C may be associated with a particular level of privilege that may be the same or similar to protection levels (e.g., processor protection rings). The privilege level may indicate an access level of a computing process to computing devices (e.g., memory, processor, or other virtual or physical resources). There may be multiple different privilege levels assigned to the computing processes 120A-C. In one example, the privilege levels may correspond generally to a user mode (e.g., reduced privilege mode, non-root mode, non-privileged mode) and a supervisor mode (e.g., enhanced privilege mode, kernel mode, root mode). The computing process executing in user mode may access resources assigned to the computing processes and may be restricted from accessing resources associated with kernel space or with another user space process (e.g., other portion of user space). For example, each computing process may have its own address space protected from other computing processes. The supervisor mode may enable the computing process to access resources associated with the kernel space and the user space. In other examples, there may be a plurality of privilege levels, and the privilege levels may include a first level (e.g., ring 0) associated with a supervisor/kernel, a second and third level (e.g., ring 1-2), and a fourth level (e.g., ring 3) that may be associated with user space applications.

A computing process may be referred to as a user space process when the computing process is executing with a user mode privilege level. In one example, the privilege level associated with a computing process may change during execution and a computing process executing in user space (e.g., userland) may request and be subsequently granted enhanced privileges by supervisor 110. Modifying the privilege level is often associated with a context switch (e.g., system call or hypercall).

Computing processes 120A-C may include event handler 122A-C, which may listen for one or more particular instructions issued (e.g., a privileged instruction) by computing process 120A-120C. A privileged instruction is an instruction that can be executed only by supervisor 110. Examples of privileged instructions may include loading or storing data to a disk, loading or storing control registers, loading or storing model-specific registers, loading an interrupt descriptor table, or invalidate a page entry in the translation look-aside buffer. In response to detecting the particular instruction, event handler 112A-C may perform one or more processes, including saving an execution state of computing process 120A-C, stopping or pausing execution of computing process 120A-C, alerting supervisor 110 of the requested privileged instruction, and communicating the privileged instruction to supervisor 110. The execution state of computing process 120A-C may include one or more of the memory state of computing process 120A-C, the virtual processor (vCPU) state of computing process 120A-C, the connectivity state of computing process 120A-C, etc. In some embodiments, to alert supervisor 110 of the privileged instruction, event handler 122A-C may modifying a predefined memory location (e.g., an address range) in user space memory 116, which will be discussed in detail below.

User space memory 116 may be a portion of virtual memory that is assigned to a particular computing process (e.g., 120A). The virtual memory may be managed by supervisor 110 and may be segregated into kernel space (not shown) and user space. The user space may be further segregated into individual portions that are assigned to respective computing processes 120A-C. To simplify the illustration, the portions of the user space assigned to computing process 120A is illustrated (e.g., user space memory 116) and the portions of user space assigned to computing processes 120B and 120C are not shown. During execution of computing process 120A, the user space memory 116 may be updated to add or remove executable data and non-executable data.

The process scheduler 114 may assign waiting threads to run on the physical processing device 134. The process scheduler 114 may handle threads, processes, and data flows by assigning, or scheduling, them to processors, network links, or other resources to handle the tasks. In one implementation, the process scheduler 114 may monitor the physical processing device 134 and execute a paused, idle, or waiting thread after a trigger condition is satisfied. In some embodiments, the trigger condition may include modification to a memory location in user space memory 116. In some embodiments, the trigger condition may be related to a UMWAIT instruction and/or a UMONITOR instruction. The UMWAIT instruction may be used in conjunction with the UMONITOR instruction. The UMWAIT instruction directs the processor to wait while monitoring an address range(s) defined in the UMONITOR instruction. The thread executing the UMWAIT instruction may wake up either when there has been a change to the address range defined in the UMONITOR instruction, or when a UMWAIT time-stamp counter reaches or exceeds the threshold period of time.

Hardware devices 130 may provide hardware resources and functionality for performing computing tasks. Hardware devices 130 may include one or more physical storage devices 132, one or more physical processing devices 134, other computing devices, or a combination thereof. One or more of hardware devices 130 may be split up into multiple separate devices or consolidated into one or more hardware devices. Some of the hardware device shown may be absent from hardware devices 130 and may instead be partially or completely emulated by executable code.

Physical storage devices 132 may include any data storage device that is capable of storing digital data and may include volatile or non-volatile data storage. Volatile data storage (e.g., non-persistent storage) may store data for any duration of time but may lose the data after a power cycle or loss of power. Non-volatile data storage (e.g., persistent storage) may store data for any duration of time and may retain the data beyond a power cycle or loss of power. In one example, physical storage devices 132 may be physical memory and may include volatile memory devices 132A (e.g., random access memory (RAM)), non-volatile memory devices 132B (e.g., flash memory, NVRAM), and/or other types of memory devices. In another example, physical storage devices 132 may include one or more mass storage devices, such as hard drives, solid state drives (SSD)), other data storage devices, or a combination thereof. In a further example, physical storage devices 132 may include a combination of one or more memory devices, one or more mass storage devices, other data storage devices, or a combination thereof, which may or may not be arranged in a cache hierarchy with multiple levels.

Physical processing devices 134 may include one or more processors that are capable of executing the computing tasks. Physical processing devices 134 may be a single core processor that is capable of executing one instruction at a time (e.g., single pipeline of instructions) or may be a multi-core processor that simultaneously executes multiple instructions. The instructions may encode arithmetic, logical, or I/O operations. In one example, physical processing devices 134 may be implemented as a single integrated circuit, two or more integrated circuits, or may be a component of a multi-chip module (e.g., in which individual microprocessor dies are included in a single integrated circuit package and hence share a single socket). A physical processing device may also be referred to as a central processing unit ("CPU").

Network 140 may be a public network (e.g., the internet), a private network (e.g., a local area network (LAN), a wide area network (WAN)), or a combination thereof. In one example, network 140 may include a wired or a wireless infrastructure, which may be provided by one or more wireless communications systems, such as a wireless fidelity (WiFi) hotspot connected with the network 140 and/or a wireless carrier system that can be implemented using various data processing equipment, communication towers, etc.

**FIG. 2** depicts a block diagram illustrating example components and modules of computer system 200 which includes technology for processing a privileged instruction issued by a computing process, in accordance with one or more aspects of the present disclosure. The components and modules discussed herein may be performed by any portion of supervisor 110 (e.g., kernel/hypervisor) or by an application, virtual machine, container, other portion of a computing system, or a combination thereof. More or less components or modules may be included without loss of generality. For example, two or more of the modules may be combined into a single modules, or features of a module may be divided into two or more modules. In one implementation, one or more of the modules may reside on different computing devices (e.g., a client device and a server device).

Computer system 200 may include event handler 210, instruction processing component 220, and user space memory 116. User space memory 116, which may include execution state data 232 and indicator data 234, may be configured by event handler 210 or instruction processing component 220. Execution state data 232 may be used to preserve the execution state of computing process 120A-C. Indicator data 220 may be used for alerting supervisor 110 (e.g., instruction processing component 220) that computing process 120A-C is attempting or requesting to execute a privileged instruction, in accordance with embodiments discussed below.

Event handler 210 be a hardware or software component that enables supervisor 110 to process privileged instructions issued by computing processes 120A-C. In one example, event handler 210 may include preservation module 212, communication module 214, and operation module 216. Each module may include executable code to perform the one or more functions or processes discussed below. In some embodiments, event handler 210 may be the same or similar to event handler 122A-C of **FIG. 1****.**

Preservation module 212 may listen for a particular instruction issued by computing process 120A-120C, such as a privileged instruction (an instruction that can be executed only by supervisor 110). In one example, a privileged instruction may be related to a specific service requested by computing process 120A-C, such as a memory management service, a process management service, a file management service, or an input/output (I/O) management service. In response to identifying that computing process 120A-C requested a privileged instruction, preservation module 212 may store the execution state of computing process 120A-120C. In one example, storing the execution state of computing process 120A-C may include one or more of the storing the memory state of computing process 120A-C, storing the virtual processor (vCPU) state of computing process 120A-C, storing the connectivity state of computing process 120A-C, etc. Preservation module 212 may store the execution state by recording data related to the execution state in execution state data 232. Since execution state data 232 resides in user space memory 116, supervisor 110 may access execution data 232.

Communication module 214 may inform supervisor 110 (e.g., instruction module 220) that the computing process 120A-C attempted to perform the privileged instruction. In some embodiment, to inform instruction module 220 of the attempt, communication module 214 may modify indicator data 234. Indicator data 234 may include memory that is assigned to be monitored by instruction processing component 220. In response to the memory in indicator data 234 being modified, instruction processing module 220 may perform one or more function to perform the privileged instruction, as will be explained in detail below. In some embodiments, indicator data 234 may consist of a bit flag, a word, a page, etc. In an example, communication module 214 may enable the bit flag (e.g., set to a value of one) to alert instruction processing component 220 that computing process 120A-C is attempting to perform the privileged instruction, thereby triggering a response from instruction processing component 220, which will be explained in detail below.

Operation module 216 may pause the execution of computing process 120A-C that issued the privileged instruction while supervisor 220 processes the privileged instruction. To pause the execution of computing process 120A-C, operation module 216 may use a particular instruction or function. For example, operation module 216 may pause execution of computing process 120A-C using a MWAIT instruction, a polling technique, a halt instruction, etc. The polling technique can include the supervisor repeatedly poll the computing process and wait for an interrupt function. While waiting for the interrupt, the supervisor refrains from running other tasks on the physical processor on which the given computing process is running. The halt (HLT) instruction is an instruction that halts a processor.

Instruction processing component 220 be a hardware or software component that processes privileged instructions issued by computing processes 120A-C. In one example, instruction processing component 220 may include monitoring module 222, execution module 224, and confirmation module 226. Each module may include executable code to perform the one or more functions or processes discussed below. In some embodiments, instruction processing component 220 may be the same or similar to instruction processing component 112 of **FIG. 1****.**

Monitoring module 222 may enable supervisor 110 to configure a portion of the user space memory of a computing process and monitor the portion for notifications of privileged instructions. In some embodiments, configuring the portion of user space memory involves mapping one or more virtual memory pages of the user space memory to a portion of volatile memory device 132A (e.g., RAM). For example, monitoring module 222 can generate indicator data 234 in user space (e.g., user space memory 116), where indicator data 234 memory referenced by a virtual address range. In some embodiments, indicator data 234 may include a single bit (e.g., a flag bit).

Monitoring module 222 may then monitor indicator data 234 for any changes. A change to indicator data 234 may include data written to the memory of indicator data 234. For example, if indicator data includes a bit flag, a change may include the bit being enabled (e.g., set to a value of one). In some embodiments, monitoring module 222 may use a UMONITOR instruction to select and monitor indicator data 234. The UMONITOR instruction may set up an address range to be monitored by hardware and activate the monitoring. The address range may be a write-back memory caching type. In some embodiments, indicator data 234 may be monitored by the user space processing thread implementing instruction processing component 220 (or supervisor 110).

Monitoring module 222 may further generate a dedicated user space processing thread (e.g., a vCPU) to wait (e.g., remain idle) while indicator data 234 is being monitored. The dedicated processing thread may be assigned to performing one or more instructions in response to a change to indicator data 234. In particular, responsive to a change to indicator data 234, the dedicated processing thread may wake up and execute execution module 224 and confirmation module 226. In some embodiments, monitoring module 222 may use a UMWAIT instruction to generate and pause instruction execution of a dedicated processing thread. In some embodiments, the UMWAIT instruction may instructs the dedicated processing thread to enter an implementation-dependent optimized state while monitoring a range of addresses.

In some embodiments, the dedicated processing thread may be within the same physical processing device (e.g., CPU) as the processing thread(s) that executes computing process 120A-C. Since the dedicated processing thread is idle while waiting, it does not impede other processing threads used by computing process 120A-C. In some embodiments, process scheduler 114 may schedule the dedicated waiting thread for execution.

Execution module 224 and confirmation module 226 may be triggered by a change (e.g., an enabled bit) to indicator data 234. For example, the UMWAIT processing thread may detect the modification to the indicator data 234. Once triggered, execution module 224 may read execution state data 232 and retrieve the privileged instruction attempted by computing process 120A-C. For example, execution module may read the stored memory state and/or vCPU state of computing process 120A-C and determine the privileged instruction issued by the computing process. Execution module 224 may then execute the privileged instruction. For example, if the privileged instruction includes a request to store data to a disk, execution module 224 may store the specified data to a disk (e.g., non-volatile memory device 132B).

Once execution module 224 processes the privileged instruction, confirmation module 226 may send an indication, to event handler 210, that the privileged instruction was processed. The indication may be used to wake up event handler 210 and to resume computing process 120A-C. In one embodiment, confirmation module 226 may modify indicator data 234. For example, confirmation module 226 may disable the bit flag (e.g., set to a value of zero) to alert event handler 210 that supervisor 110 has processed the privileged instruction. Since the bit flag is disabled, the processing thread executing execution module 224 and confirmation module 226 may switch to idle and monitoring module 222 may once again monitor indicator data 234 for changes made by event handler 210 (e.g., another issued privileged instruction). In another embodiment, confirmation module 226 may send an interrupt (e.g., a non-maskable interrupt) to event handler 210 to indicate that the privileged instruction has been processed. In other embodiments, other instructions or functions can be used to wake up event handler 210 and/or indicate that the privileged instruction has been processed.

In response to receiving the indication that the privileged instruction has been processed, event handler 210 may resume operation of computing process 120A-C. For example, event handler 210 use a resume instruction, send a request to process scheduler 114 to resume computing process 120A-C, indicate that a condition instruction has been satisfied (e.g., indicate that a condition of an MWAIT instruction has been satisfied), etc.

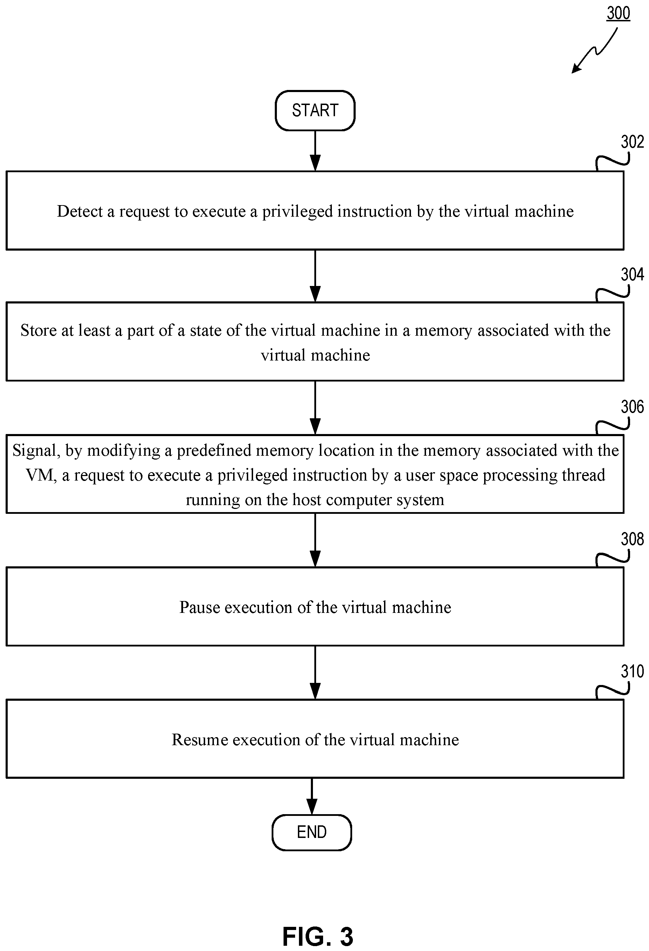

**FIG. 3** depicts a flow diagram of an illustrative example of a method 300 for signaling a request to execute a privileged instruction, in accordance with one or more aspects of the present disclosure. Method 300 and each of its individual functions, routines, subroutines, or operations may be performed by one or more processors of the computer device executing the method. In certain implementations, method 300 may be performed by a single processing thread. Alternatively, method 300 may be performed by two or more processing threads, each thread executing one or more individual functions, routines, subroutines, or operations of the method. In an illustrative example, the processing threads implementing method 300 may be synchronized (e.g., using semaphores, critical sections, and/or other thread synchronization mechanisms). Alternatively, the processes implementing method 300 may be executed asynchronously with respect to each other.

For simplicity of explanation, the methods of this disclosure are depicted and described as a series of acts. However, acts in accordance with this disclosure can occur in various orders and/or concurrently, and with other acts not presented and described herein. Furthermore, not all illustrated acts may be required to implement the methods in accordance with the disclosed subject matter. In addition, those skilled in the art will understand and appreciate that the methods could alternatively be represented as a series of interrelated states via a state diagram or events. Additionally, it should be appreciated that the methods disclosed in this specification are capable of being stored on an article of manufacture to facilitate transporting and transferring such methods to computing devices. The term "article of manufacture," as used herein, is intended to encompass a computer program accessible from any computer-readable device or storage media. In one implementation, method 300 may be performed by a computing process (e.g., a virtual machine) as shown in **FIG. 1** or by an executable code of a host machine (e.g., host operating system or firmware), a supervisor, a kernel, a guest operating system or virtual firmware, other executable code, or a combination thereof.

Method 300 may be performed by processing devices of a server device or a client device and may begin at block 302. At block 302, an exception handler of a virtual machine (or other computing process) running on a host computer system may detect a request to execute a privileged instruction by the virtual machine. For example, the exception handler may listen for a specific service requested by virtual machine, such as a memory management service, a process management service, a file management service, an input/output (I/O) management service, etc.

At block 304, the exception handler may store at least a part of a state of the virtual machine in a memory associated with the virtual machine. For example, the exception handler may store the memory state of virtual machine, the vCPU state of the virtual machine, the connectivity state of the virtual machine, etc.

At block 306, the exception handler may signal, by modifying a predefined memory location in the memory associated with the VM, a request to execute a privileged instruction by a user space processing thread running on the host computer system. In some embodiments, the predetermined memory location may be a bit flag, a word, a page, etc. In some embodiments, the user space processing thread may implement a user space hypervisor.

At block 308, the exception handler may pause execution of the virtual machine. For example, the exception handler may pause execution of the virtual machine by performing a MWAIT instruction, a polling instruction, or a halt instruction.

At block 310, the exception handler may resume execution of the virtual machine. In some embodiments, the exception hander may resume execution of the virtual machine in response to receiving, from the user space processing thread, a notification that the privileged instruction was performed. For example, the notification may be an interrupt. In some embodiments, the exception hander may resume execution of the virtual machine in response to determining that the predefined memory location was modified. For example, the exception handler may determine that the bit flag was set to a value of zero. Responsive to completing the operations described herein above with references to block 310, the method may terminate.

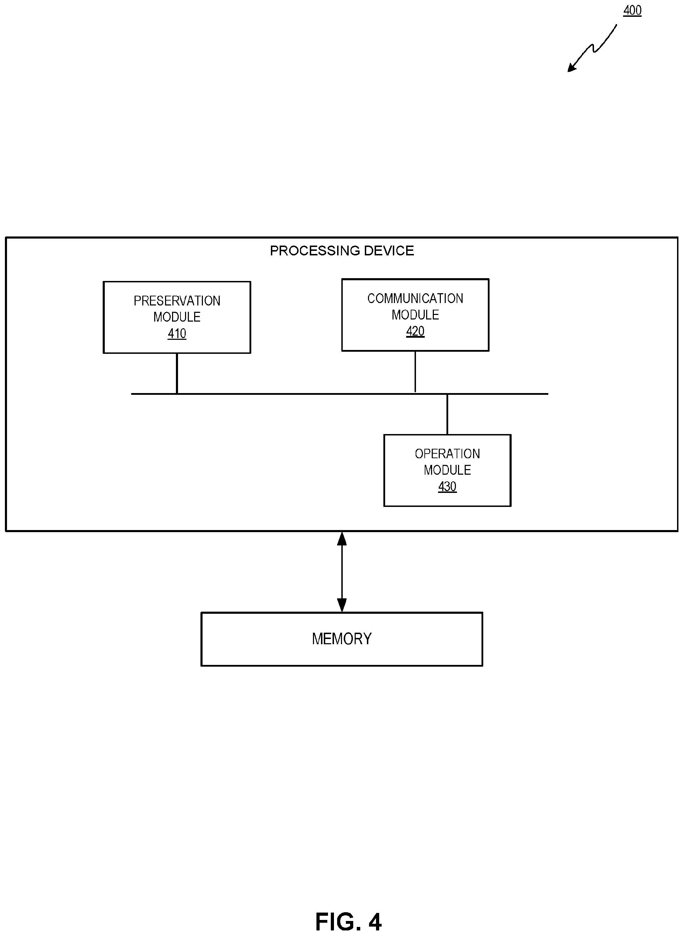

**FIG. 4** depicts a block diagram of a computer system 400 operating in accordance with one or more aspects of the present disclosure. Computer system 400 may be the same or similar to computing process 120A-C, event handler 210 and computer system 100 and may include one or more processing devices and one or more memory devices. In the example shown, computer system 400 may include preservation module 410, communication module 420, and operation module 430.

Preservation module 410 may detect a request to execute a privileged instruction by the virtual machine. For example, the preservation module 410 may listen for a specific service requested by virtual machine, such as a memory management service, a process management service, a file management service, an input/output (I/O) management service, etc. Preservation module. Preservation module 410 may then store at least a part of a state of the virtual machine in a memory associated with the virtual machine. For example, preservation module 410 may store the memory state of virtual machine, the vCPU state of the virtual machine, the connectivity state of the virtual machine, etc.

Communication module 420 may signal, by modifying a predefined memory location in the memory associated with the VM, a request to execute a privileged instruction by a user space processing thread running on the host computer system. In some embodiments, the predetermined memory location may be a bit flag, a word, a page, etc. In some embodiments, the user space processing thread may implement a user space hypervisor.

Operation module 430 may pause execution of the virtual machine. For example, the operation module 430 may pause execution of the virtual machine by performing a MWAIT instruction, a polling instruction, or a halt instruction. Operation module 430 may resume execution of the virtual machine. In some embodiments, operation module 430 may resume execution of the virtual machine in response to receiving, from the user space processing thread, a notification that the privileged instruction was performed. For example, the notification may be an interrupt. In some embodiments, operation module 430 may resume execution of the virtual machine in response to determining that the predefined memory location was modified. For example, operation module 430 may determine that the bit flag was set to a value of zero.

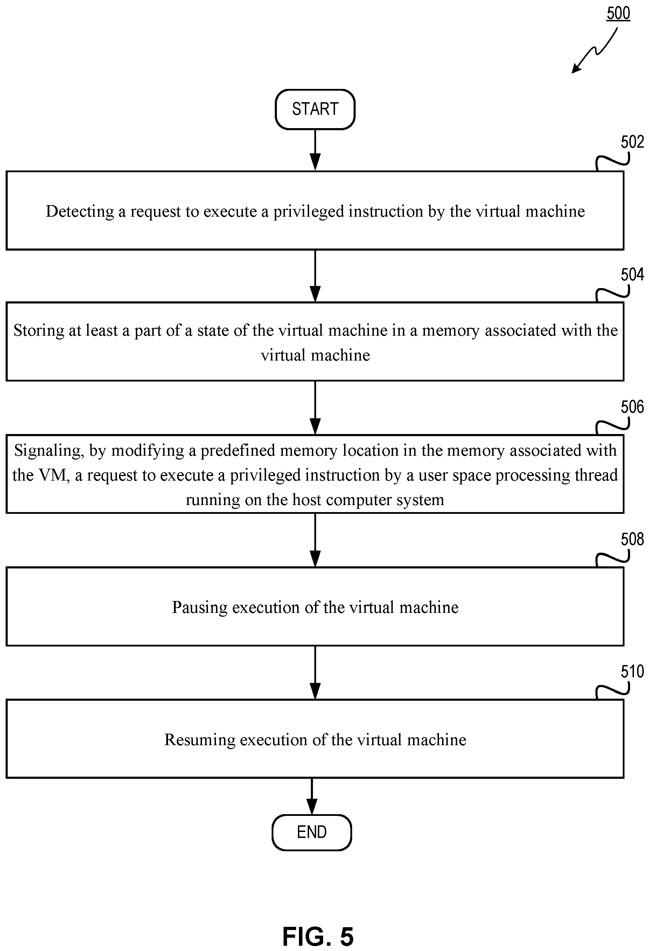

**FIG. 5** depicts a flow diagram of one illustrative example of a method 500 for signaling a request to execute a privileged instruction, in accordance with one or more aspects of the present disclosure. Method 500 may be similar to method 300 and may be performed in the same or a similar manner as described above in regards to method 300. Method 500 may be performed by processing devices of a server device or a client device and may begin at block 502.

At block 502, a processing device may detect a request to execute a privileged instruction by a virtual machine. For example, the processing device may listen for a specific service requested by virtual machine, such as a memory management service, a process management service, a file management service, an input/output (I/O) management service, etc.

At block 504, the processing device may store at least a part of a state of the virtual machine in a memory associated with the virtual machine. For example, the processing device may store the memory state of virtual machine, the vCPU state of the virtual machine, the connectivity state of the virtual machine, etc.

At block 506, the processing device may signal, by modifying a predefined memory location in the memory associated with the VM, a request to execute a privileged instruction by a user space processing thread running on the host computer system. In some embodiments, the predetermined memory location may be a bit flag, a word, a page, etc. In some embodiments, the user space processing thread may implement a user space hypervisor.

At block 508, the processing device may pause execution of the virtual machine. For example, the processing device may pause execution of the virtual machine by performing a MWAIT instruction, a polling instruction, or a halt instruction

At block 510, the processing device may resume execution of the virtual machine. In some embodiments, the processing device may resume execution of the virtual machine in response to receiving, from the user space processing thread, a notification that the privileged instruction was performed. For example, the notification may be an interrupt. In some embodiments, the processing device may resume execution of the virtual machine in response to determining that the predefined memory location was modified. For example, the processing device may determine that the bit flag was set to a value of zero. Responsive to completing the operations described herein above with references to block 510, the method may terminate.

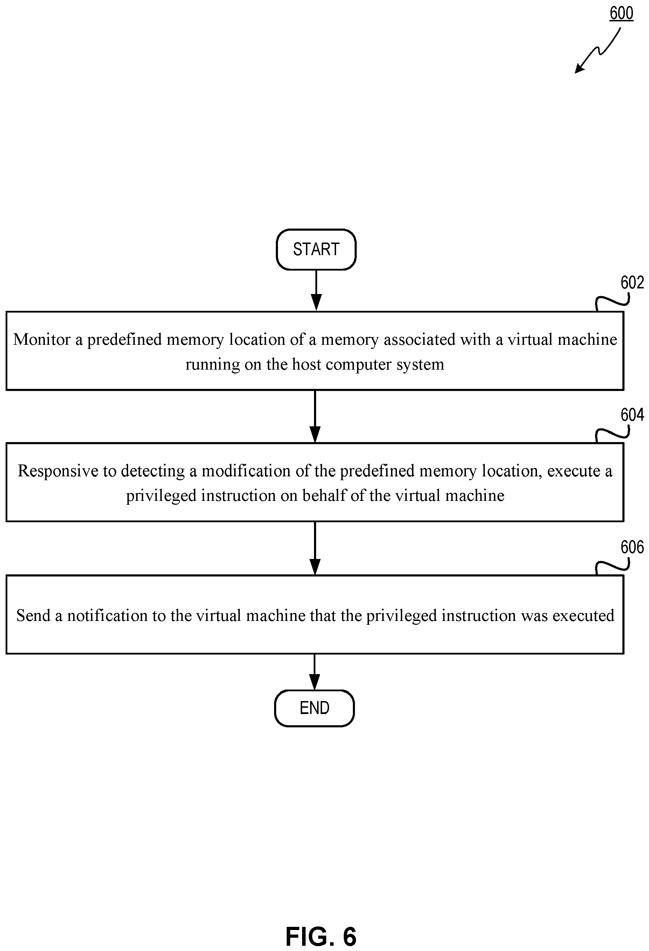

**FIG. 6** depicts a flow diagram of an illustrative example of a method 600 for executing a privileged instruction on behalf of a virtual machine, in accordance with one or more aspects of the present disclosure. Method 600 and each of its individual functions, routines, subroutines, or operations may be performed by one or more processors of the computer device executing the method. In certain implementations, method 600 may be performed by a single processing thread. Alternatively, method 600 may be performed by two or more processing threads, each thread executing one or more individual functions, routines, subroutines, or operations of the method. In an illustrative example, the processing threads implementing method 600 may be synchronized (e.g., using semaphores, critical sections, and/or other thread synchronization mechanisms). Alternatively, the processes implementing method 600 may be executed asynchronously with respect to each other.

For simplicity of explanation, the methods of this disclosure are depicted and described as a series of acts. However, acts in accordance with this disclosure can occur in various orders and/or concurrently, and with other acts not presented and described herein. Furthermore, not all illustrated acts may be required to implement the methods in accordance with the disclosed subject matter. In addition, those skilled in the art will understand and appreciate that the methods could alternatively be represented as a series of interrelated states via a state diagram or events. Additionally, it should be appreciated that the methods disclosed in this specification are capable of being stored on an article of manufacture to facilitate transporting and transferring such methods to computing devices. The term "article of manufacture," as used herein, is intended to encompass a computer program accessible from any computer-readable device or storage media. In one implementation, method 600 may be performed by a supervisor as shown in **FIG. 1** or by an executable code of a host machine (e.g., host operating system or firmware), computing process (e.g., a virtual machine), a kernel, a guest operating system or virtual firmware, other executable code, or a combination thereof.

Method 600 may be performed by processing devices of a server device or a client device and may begin at block 602. At block 602, a host computer system may monitor a predefined memory location of a memory associated with a virtual machine running on the host computer system. In some embodiments, the monitoring may be performed by a user space processing thread running on the host computer system. The host computer system may also execute the virtual machine using another processing thread associated with a same central processing unit (CPU) as the user space processing thread. The predetermined memory location may be a bit flag, a word, a page, etc. In some embodiments, the user space processing thread may implement a user space hypervisor. Monitoring the predefined memory location may include executing at least one of a UMONITOR instruction or a UMWAIT instruction.

At block 604, responsive to detecting a modification of the predefined memory location, the host computer system may execute a privileged instruction on behalf of the virtual machine. In some embodiments, the host computer system may extract the privileged instruction from state data stored in the memory associated with the virtual machine.

At block 606, the host computer system may send a notification to the virtual machine that the privileged instruction was executed. The notification may include modifying the predefined memory location to indicate, to the virtual machine, that the privileged instruction has been executed. For example, the bit flag may be set to a value of zero. In another example, notification may include an interrupt. Responsive to completing the operations described herein above with references to block 606, the method may terminate.

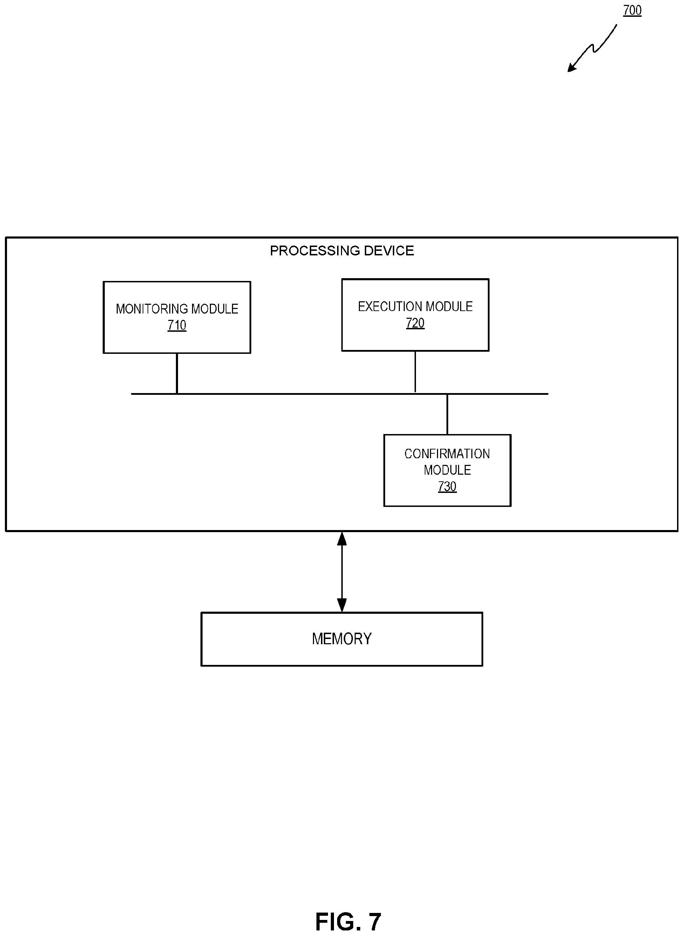

**FIG. 7** depicts a block diagram of a computer system 700 operating in accordance with one or more aspects of the present disclosure. Computer system 700 may be the same or similar to supervisor 110 and computer system 100 and may include one or more processing devices and one or more memory devices. In the example shown, computer system 400 may include monitoring module 710, execution module 720, and confirmation module 730.

Monitoring module 710 may monitor a predefined memory location of a memory associated with a virtual machine running on the host computer system. In some embodiments, the monitoring may be performed by a user space processing thread running on the host computer system. Monitoring module 720 may also execute the virtual machine using another processing thread associated with a same central processing unit (CPU) as the user space processing thread. The predetermined memory location may be a bit flag, a word, a page, etc. In some embodiments, the user space processing thread may implement a user space hypervisor. Monitoring the predefined memory location may include executing at least one of a UMONITOR instruction or a UMWAIT instruction.

Execution module 720 may, responsive to detecting a modification of the predefined memory location, execute a privileged instruction on behalf of the virtual machine. In some embodiments, execution module 720 may extract the privileged instruction from state data stored in the memory associated with the virtual machine.

Confirmation module 730 may send a notification to the virtual machine that the privileged instruction was executed. The notification may include modifying the predefined memory location to indicate, to the virtual machine, that the privileged instruction has been executed. For example, the bit flag may be set to a value of zero. In another example, notification may include an interrupt.

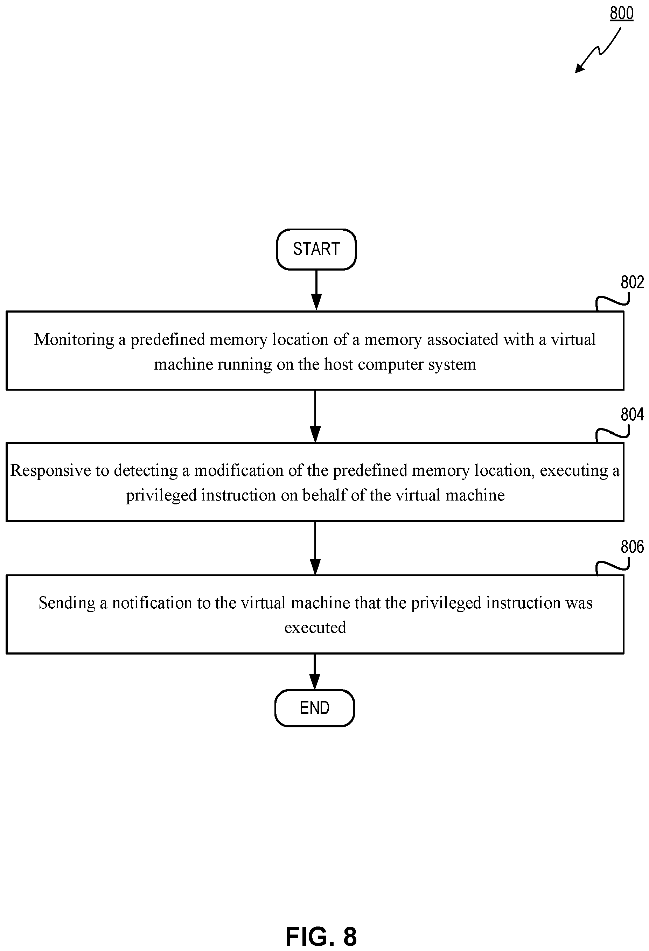

**FIG. 8** depicts a flow diagram of one illustrative example of a method 800 for executing a privileged instruction on behalf of a virtual machine, in accordance with one or more aspects of the present disclosure. Method 800 may be similar to method 600 and may be performed in the same or a similar manner as described above in regards to method 600. Method 800 may be performed by processing devices of a server device or a client device and may begin at block 802.

At block 802, a processing device may monitor a predefined memory location of a memory associated with a virtual machine running on the host computer system. In some embodiments, the monitoring may be performed by a user space processing thread running on the host computer system. The processing device may also execute the virtual machine using another processing thread associated with a same central processing unit (CPU) as the user space processing thread. The predetermined memory location may be a bit flag, a word, a page, etc. In some embodiments, the user space processing thread may implement a user space hypervisor. Monitoring the predefined memory location may include executing at least one of a UMONITOR instruction or a UMWAIT instruction.

At block 804, responsive to detecting a modification of the predefined memory location, the processing device may execute a privileged instruction on behalf of the virtual machine. In some embodiments, the processing device may extract the privileged instruction from state data stored in the memory associated with the virtual machine.

At block 806, the processing device may send a notification to the virtual machine that the privileged instruction was executed. The notification may include modifying the predefined memory location to indicate, to the virtual machine, that the privileged instruction has been executed. For example, the bit flag may be set to a value of zero. In another example, notification may include an interrupt. Responsive to completing the operations described herein above with references to block 806, the method may terminate.

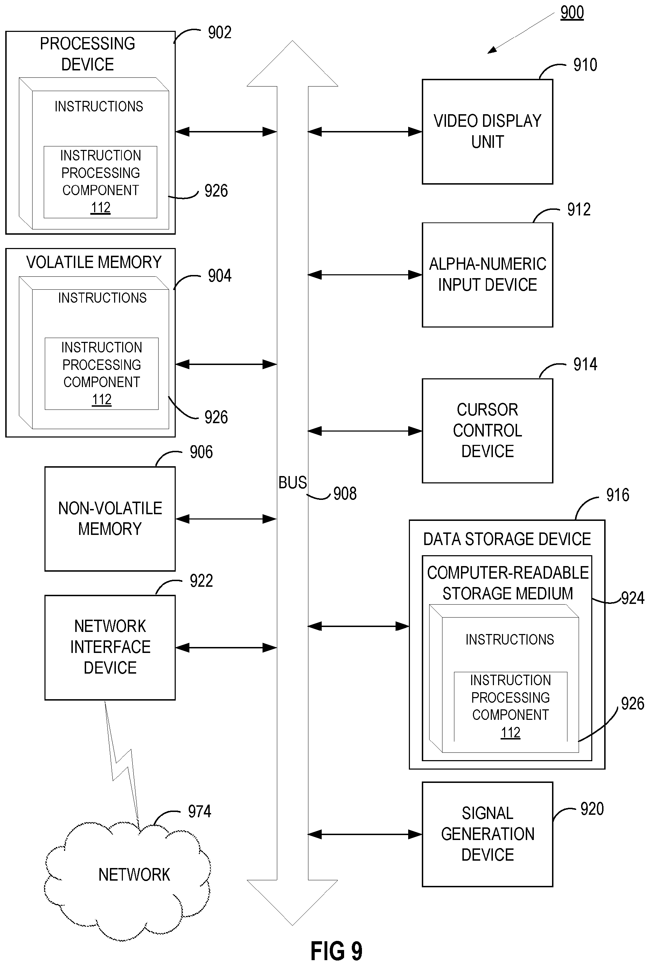

**FIG. 9** depicts a block diagram of a computer system operating in accordance with one or more aspects of the present disclosure. In various illustrative examples, computer system 900 may correspond to computing device 100 of **FIG. 1** or computer system 200 of **FIG. 2****.** The computer system may be included within a data center that supports virtualization. Virtualization within a data center results in a physical system being virtualized using virtual machines to consolidate the data center infrastructure and increase operational efficiencies. A virtual machine (VM) may be a program-based emulation of computer hardware. For example, the VM may operate based on computer architecture and functions of computer hardware resources associated with hard disks or other such memory. The VM may emulate a physical computing environment, but requests for a hard disk or memory may be managed by a virtualization layer of a computing device to translate these requests to the underlying physical computing hardware resources. This type of virtualization results in multiple VMs sharing physical resources.

In certain implementations, computer system 900 may be connected (e.g., via a network, such as a Local Area Network (LAN), an intranet, an extranet, or the Internet) to other computer systems. Computer system 900 may operate in the capacity of a server or a client computer in a client-server environment, or as a peer computer in a peer-to-peer or distributed network environment. Computer system 900 may be provided by a personal computer (PC), a tablet PC, a set-top box (STB), a Personal Digital Assistant (PDA), a cellular telephone, a web appliance, a server, a network router, switch or bridge, or any device capable of executing a set of instructions (sequential or otherwise) that specify actions to be taken by that device. Further, the term "computer" shall include any collection of computers that individually or jointly execute a set (or multiple sets) of instructions to perform any one or more of the methods described herein.

In a further aspect, the computer system 900 may include a processing device 902, a volatile memory 904 (e.g., random access memory (RAM)), a non-volatile memory 906 (e.g., read-only memory (ROM) or electrically-erasable programmable ROM (EEPROM)), and a data storage device 916, which may communicate with each other via a bus 908.

Processing device 902 may be provided by one or more processors such as a general purpose processor (such as, for example, a complex instruction set computing (CISC) microprocessor, a reduced instruction set computing (RISC) microprocessor, a very long instruction word (VLIW) microprocessor, a microprocessor implementing other types of instruction sets, or a microprocessor implementing a combination of types of instruction sets) or a specialized processor (such as, for example, an application specific integrated circuit (ASIC), a field programmable gate array (FPGA), a digital signal processor (DSP), or a network processor).

Computer system 900 may further include a network interface device 922. Computer system 900 also may include a video display unit 910 (e.g., an LCD), an alphanumeric input device 912 (e.g., a keyboard), a cursor control device 914 (e.g., a mouse), and a signal generation device 920.

Data storage device 916 may include a non-transitory computer-readable storage medium 924 on which may store instructions 926 encoding any one or more of the methods or functions described herein, including instructions for implementing methods 300, 500, 600, or 800 and for instruction processing component 112 and event handler 122A-C (not shown), and modules illustrated in **FIGS. 1** and **2****.**

Instructions 926 may also reside, completely or partially, within volatile memory 904 and/or within processing device 902 during execution thereof by computer system 900, hence, volatile memory 904 and processing device 902 may also constitute machine-readable storage media.

While computer-readable storage medium 924 is shown in the illustrative examples as a single medium, the term "computer-readable storage medium" shall include a single medium or multiple media (e.g., a centralized or distributed database, and/or associated caches and servers) that store the one or more sets of executable instructions. The term "computer-readable storage medium" shall also include any tangible medium that is capable of storing or encoding a set of instructions for execution by a computer that cause the computer to perform any one or more of the methods described herein. The term "computer-readable storage medium" shall include, but not be limited to, solid-state memories, optical media, and magnetic media.

Other computer system designs and configurations may also be suitable to implement the system and methods described herein. The following examples illustrate various implementations in accordance with one or more aspects of the present disclosure.

Example 1 is a method comprising detecting, by an exception handler of a virtual machine running on a host computer system, a request to execute a privileged instruction by the virtual machine, storing at least a part of a state of the virtual machine in a memory associated with the virtual machine, signaling, by modifying a predefined memory location in the memory associated with the VM, a request to execute a privileged instruction by a user space processing thread running on the host computer system, and pausing execution of the virtual machine.

Example 2 is a method of claim 1, further comprising responsive to receiving, from the user space processing thread, a notification that the privileged instruction was performed, resuming, by the exception handler, execution of the virtual machine.

Example 3 is a method of claim 2, wherein the notification comprises an interrupt.

Example 4 is a method of claim 1, further comprising, responsive to determining that the predefined memory location was modified, resuming, by the exception handler, execution of the virtual machine.

Example 5 is a method of claim 1, wherein the predetermined memory location comprises a bit flag.

Example 6 is a method of claim 1, wherein the user space processing thread implements a user space hypervisor.

Example 7 is a method of claim 1, wherein pausing execution of the virtual machine comprises performing at least one of a MWAIT instruction, a polling instruction, or a halt instruction.

Example 8 is a method comprising monitoring, by user space processing thread running on a host computer system, a predefined memory location of a memory associated with a virtual machine running on the host computer system, responsive to detecting a modification of the predefined memory location, executing a privileged instruction on behalf of the virtual machine, and sending a notification to the virtual machine that the privileged instruction was executed.

Example 9 is a method of claim 8, further comprising executing the virtual machine using another processing thread associated with a same central processing unit (CPU) as the user space processing thread.

Example 10 is a method of claim 8, wherein the notification comprises modifying the predefined memory location to indicate, to the virtual machine, that the privileged instruction has been executed.

Example 11 is a method of claim 8, wherein the predetermined memory location comprises a bit flag.

Example 12 is a method of claim 8, further comprising extracting the privileged instruction from state data stored in the memory associated with the virtual machine.

Example 13 is a method of claim 8, wherein monitoring the predefined memory location comprises executing at least one of a UMONITOR instruction or a UMWAIT instruction.

Example 14 is a method of claim 8, wherein the user space processing thread implements a user space hypervisor.

Example 15 is a system, comprising a memory and a processing device operatively coupled to the memory, the processing device configured to monitor, by user space processing thread running on a host computer system, a predefined memory location of a memory associated with a virtual machine running on the host computer system, responsive to detecting a modification of the predefined memory location, execute a privileged instruction on behalf of the virtual machine, and send a notification to the virtual machine that the privileged instruction was executed.

Example 16 is a system of claim 15, further comprising the processing device configured to execute the virtual machine using another processing thread associated with a same central processing unit (CPU) as the user space processing thread.

Example 17 is a system of claim 15, wherein the notification comprises modifying the predefined memory location to indicate, to the virtual machine, that the privileged instruction has been executed.

Example 18 is a system of claim 15, wherein the predetermined memory location comprises a bit flag.

Example 19 is a system of claim 15, further comprising the processing device configured to extract the privileged instruction from state data stored in the memory associated with the virtual machine.

Example 20 is a system of claim 15, wherein monitoring the predefined memory location comprises executing at least one of a UMONITOR instruction or a UMWAIT instruction.

Example 21 is a system of claim 15, wherein the user space processing thread implements a user space hypervisor.

Example 22 is a system, comprising a memory and a processing device operatively coupled to the memory, the processing device configured to detect, by an exception handler of a virtual machine running on a host computer system, a request to execute a privileged instruction by the virtual machine, store at least a part of a state of the virtual machine in a memory associated with the virtual machine, signal, by modifying a predefined memory location in the memory associated with the VM, a request to execute a privileged instruction by a user space processing thread running on the host computer system, and pause execution of the virtual machine.

Example 23 is a system of claim 22, further comprising the processing device configured to responsive to receiving, from the user space processing thread, a notification that the privileged instruction was performed, resuming, by the exception handler, execution of the virtual machine.

Example 24 is a system of claim 23, wherein the notification comprises an interrupt.

Example 25 is a system of claim 22, further comprising the processing device configured to responsive to determining that the predefined memory location was modified, resuming, by the exception handler, execution of the virtual machine.

Example 26 is a system of claim 22, wherein the predetermined memory location comprises a bit flag.

Example 27 is a system of claim 22, wherein the user space processing thread implements a user space hypervisor.

Example 28 is a system of claim 22, wherein pausing execution of the virtual machine comprises performing at least one of a MWAIT instruction, a polling instruction, or a halt instruction.

Example 29 is a non-transitory machine-readable storage medium storing instructions that cause a processing device to monitor, by user space processing thread running on a host computer system, a predefined memory location of a memory associated with a virtual machine running on the host computer system, responsive to detecting a modification of the predefined memory location, execute a privileged instruction on behalf of the virtual machine, and send a notification to the virtual machine that the privileged instruction was executed.

Example 30 is a non-transitory machine-readable storage medium of claim 29, further comprising the processing device configured to execute the virtual machine using another processing thread associated with a same central processing unit (CPU) as the user space processing thread.

Example 31 is a non-transitory machine-readable storage medium of claim 29, wherein the notification comprises modifying the predefined memory location to indicate, to the virtual machine, that the privileged instruction has been executed.

Example 32 is a non-transitory machine-readable storage medium of claim 29, wherein the predetermined memory location comprises a bit flag.

Example 33 is a non-transitory machine-readable storage medium of claim 29, further comprising the processing device configured to extract the privileged instruction from state data stored in the memory associated with the virtual machine.

Example 34 is a non-transitory machine-readable storage medium of claim 29, wherein monitoring the predefined memory location comprises executing at least one of a UMONITOR instruction or a UMWAIT instruction.

Example 35 is a non-transitory machine-readable storage medium of claim 29, wherein the user space processing thread implements a user space hypervisor.

Example 36 is a non-transitory machine-readable storage medium storing instructions that cause a processing device to detect, by an exception handler of a virtual machine running on a host computer system, a request to execute a privileged instruction by the virtual machine, store at least a part of a state of the virtual machine in a memory associated with the virtual machine, signal, by modifying a predefined memory location in the memory associated with the VM, a request to execute a privileged instruction by a user space processing thread running on the host computer system, and pause execution of the virtual machine.

Example 37 is a non-transitory machine-readable storage medium of claim 36, further comprising the processing device configured to responsive to receiving, from the user space processing thread, a notification that the privileged instruction was performed, resuming, by the exception handler, execution of the virtual machine.

Example 38 is a non-transitory machine-readable storage medium of claim 37, wherein the notification comprises an interrupt.

Example 39 is a non-transitory machine-readable storage medium of claim 36, further comprising the processing device configured to responsive to determining that the predefined memory location was modified, resuming, by the exception handler, execution of the virtual machine.

Example 40 is a non-transitory machine-readable storage medium of claim 36, wherein the predetermined memory location comprises a bit flag.

Example 41 is a non-transitory machine-readable storage medium of claim 36, wherein the user space processing thread implements a user space hypervisor.

Example 42 is a non-transitory machine-readable storage medium of claim 36, wherein pausing execution of the virtual machine comprises performing at least one of a MWAIT instruction, a polling instruction, or a halt instruction.

Example 43 is a method comprising detecting, by an exception handler of a guest running on a host computer system, a request to execute a privileged instruction by the guest; storing a privileged instruction in a user space memory associated with the guest; and responsive to detecting a modification of a memory page, executing the privileged instruction by a processing thread assigned to the memory page.

The methods, components, and features described herein may be implemented by discrete hardware components or may be integrated in the functionality of other hardware components such as ASICS, FPGAs, DSPs or similar devices. In addition, the methods, components, and features may be implemented by firmware modules or functional circuitry within hardware devices. Further, the methods, components, and features may be implemented in any combination of hardware devices and computer program components, or in computer programs.

Unless specifically stated otherwise, terms such as "initiating," "transmitting," "receiving," "analyzing," or the like, refer to actions and processes performed or implemented by computer systems that manipulates and transforms data represented as physical (electronic) quantities within the computer system registers and memories into other data similarly represented as physical quantities within the computer system memories or registers or other such information storage, transmission or display devices. Also, the terms "first," "second," "third," "fourth," etc. as used herein are meant as labels to distinguish among different elements and may not have an ordinal meaning according to their numerical designation.

Examples described herein also relate to an apparatus for performing the methods described herein. This apparatus may be specially constructed for performing the methods described herein, or it may comprise a general purpose computer system selectively programmed by a computer program stored in the computer system. Such a computer program may be stored in a computer-readable tangible storage medium.

The methods and illustrative examples described herein are not inherently related to any particular computer or other apparatus. Various general purpose systems may be used in accordance with the teachings described herein, or it may prove convenient to construct more specialized apparatus to perform methods 300, 500, 600, or 800 and one or more of its individual functions, routines, subroutines, or operations. Examples of the structure for a variety of these systems are set forth in the description above.

The above description is intended to be illustrative, and not restrictive. Although the present disclosure has been described with references to specific illustrative examples and implementations, it will be recognized that the present disclosure is not limited to the examples and implementations described. The scope of the disclosure should be determined with reference to the following claims, along with the full scope of equivalents to which the claims are entitled.

## Claims

1. A method comprising:
detecting, by an exception handler of a virtual machine running on a host computer system, a request to execute a privileged instruction by the virtual machine;
storing at least a part of a state of the virtual machine in a memory associated with the virtual machine;
signaling, by modifying a predefined memory location in the memory associated with the VM, a request to execute a privileged instruction by a user space processing thread running on the host computer system; and
pausing execution of the virtual machine.

2. The method of claim 1, further comprising:
responsive to receiving, from the user space processing thread, a notification that the privileged instruction was performed, resuming, by the exception handler, execution of the virtual machine and, wherein the notification optionally comprises an interrupt.

3. The method of claim 1, further comprising:
responsive to determining that the predefined memory location was modified, resuming, by the exception handler, execution of the virtual machine.

4. The method of claim 1, wherein pausing execution of the virtual machine comprises performing at least one of a MWAIT instruction, a polling instruction, or a halt instruction.

5. A method, comprising:
monitoring, by user space processing thread running on a host computer system, a predefined memory location of a memory associated with a virtual machine running on the host computer system;
responsive to detecting a modification of the predefined memory location, executing a privileged instruction on behalf of the virtual machine; and
sending a notification to the virtual machine that the privileged instruction was executed.

6. The method of claim 5, further comprising:
executing the virtual machine using another processing thread associated with a same central processing unit (CPU) as the user space processing thread.

7. The method of claim 5, wherein the notification comprises modifying the predefined memory location to indicate, to the virtual machine, that the privileged instruction has been executed.

8. The method of claim 5, further comprising:
extracting the privileged instruction from state data stored in the memory associated with the virtual machine.

9. The method of either claim 1 or claim 5, wherein the user space processing thread implements a user space hypervisor.

10. A system, comprising:
a memory;
a processing device operatively coupled to the memory, the processing device configured to:
monitor, by user space processing thread running on a host computer system, a predefined memory location of a memory associated with a virtual machine running on the host computer system;
responsive to detecting a modification of the predefined memory location, execute a privileged instruction on behalf of the virtual machine; and
send a notification to the virtual machine that the privileged instruction was executed.

11. The system of claim 10, further comprising the processing device configured to:
execute the virtual machine using another processing thread associated with a same central processing unit (CPU) as the user space processing thread.

12. The system of claim 10, wherein the notification comprises modifying the predefined memory location to indicate, to the virtual machine, that the privileged instruction has been executed.

13. The system of claim 10, further comprising the processing device configured to:
extract the privileged instruction from state data stored in the memory associated with the virtual machine.

14. The method of claim 5, or the system of claim 10, wherein monitoring the predefined memory location comprises executing at least one of a UMONITOR instruction or a UMWAIT instruction.

15. The method of either of claims 1 or 5, or the system of claim 10, wherein the predetermined memory location comprises a bit flag
